(19) Europäisches Patentamt / European Patent Office / Office européen des brevets

(11) **EP 2 622 418 B1**

(12) **EUROPÄISCHE PATENTSCHRIFT**

(45) Veröffentlichungstag und Bekanntmachung des Hinweises auf die Patenterteilung:
**29.07.2015   Patentblatt 2015/31**

(21) Anmeldenummer: **11764100.1**

(22) Anmeldetag: **15.09.2011**

(51) Int Cl.:
***G05B 9/02*** (2006.01)

(86) Internationale Anmeldenummer:
**PCT/EP2011/004638**

(87) Internationale Veröffentlichungsnummer:
**WO 2012/041450 (05.04.2012 Gazette 2012/14)**

(54) **SCHALTUNGSANORDNUNG UND VERFAHREN ZUR ÜBERWACHUNG EINES DSPS IM RAHMEN EINER SICHERHEITSKRITISCHEN ANWENDUNG**

CIRCUIT ARRANGEMENT AND METHOD FOR MONITORING A DSP IN THE CONTEXT OF A SECURITY CRITICAL APPLICATION

AGENCEMENT DE CIRCUITS ET PROCÉDÉ DE SURVEILLANCE D'UN PROCESSEUR DSP DANS LE CADRE D'UNE APPLICATION CRITIQUE POUR LA SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2010   DE 102010047269**

(43) Veröffentlichungstag der Anmeldung:
**07.08.2013   Patentblatt 2013/32**

(73) Patentinhaber: **Diehl Aerospace GmbH
88662 Überlingen (DE)**

(72) Erfinder:
• **KURZ, Nikolaus
88662 Überlingen (DE)**

• **BONERZ, Christian
78354 Sipplingen (DE)**
• **MACHE, Erik
88634 Herdwangen-Schönach (DE)**

(74) Vertreter: **Diehl Patentabteilung
c/o Diehl Stiftung & Co. KG
Stephanstrasse 49
90478 Nürnberg (DE)**

(56) Entgegenhaltungen:
**EP-A1- 1 980 924     US-A- 4 841 209
US-A- 5 680 409      US-A1- 2005 049 775**

**Beschreibung**

Die Erfindung betrifft eine Schaltungsanordnung eines sensorgetriggerten Kontroll- und/oder Anzeigesystems mit einem digitalen Signalprozessor (=DSP) im Rahmen einer sicherheitskritischen Anwendung und ein Verfahren zur Überwachung eines DSPs im Rahmen einer sicherheitskritischen Anwendung, wobei der DSP aus Positions- und/oder Lagesignalen von Positions- und/oder Lagesensoren die aktuelle Position und/oder Lage eines Gegenstandes ermittelt.

Digitale Signalprozessoren und deren Anwendungsmöglichkeiten sind allgemein bekannt. Es ist auch bekannt, dass solche DSP im Rahmen der Signalverarbeitung von Positions- und Lagesignalen von Positions- und Lagesensoren eingesetzt werden können, wo mit geringem Entwicklungsaufwand komplexe Systeme und Schaltungsanordnungen verwirklicht werden können. Aufgrund der enormen Komplexität solcher integrierter Schaltkreise und auch der meist nicht gegebenen öffentlichen Zugänglichkeit der Schaltpläne sind diese in der Regel nicht vollständig analysierbar und vollständig testbar. Für sicherheitskritische Anwendungen ist dies jedoch Grundvoraussetzung für die Anwendung solcher Schaltkreise, zumindest muss die Möglichkeit gegeben sein, Fehler, die eventuell in der Schaltung auftreten können, durch eine redundante und unabhängig entwickelte zweite Schaltung detektieren zu können. Grundsätzlich wäre es möglich, wie in der EP 1 980 924 A1 offenbart, zwei DSP aus voneinander unabhängigen Quellen zu verwenden und durch Vergleich der von den beiden DSP ausgegebenen Signalen Fehler zu detektieren, allerdings verdoppeln sich dadurch fast die Herstellungskosten, so dass diese Möglichkeit für eine preisgünstige Schaltungsanordnung wegfällt.

Es ist daher Aufgabe der Erfindung, eine Möglichkeit zu finden, die Vorteile eines solchen DSPs bezüglich der einfachen Entwicklung mit der Notwendigkeit einer Überprüfung zu koppeln, ohne auf zwei unterschiedliche DSP zurückgreifen zu müssen.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben folgendes erkannt:

In Kontrollsystemen werden Prozesswerte mit unterschiedlichen Sensoren erfasst. Einige Prozesswerte, insbesondere Positionswerte, werden über Sensoren ermittelt, die die Auswertung mehrerer Wechselspannungen im Verhältnis zueinander erfordern. Beispiele hierfür sind lineare Positionsgeber, wie LVDTs (LVDT=Linearer Variabler Differenzial Transformator), sowie Winkelgeber, wie RVDTs (RVDT= Rotatorischer Variabler Differenzial Transformator), Resolver und Synchros. Diese Sensoren werden typischerweise mit einer Wechselspannung erregt und geben eine oder mehrere sekundäre Wechselspannungen zurück. Der Positionsinformation ist sowohl in den Amplituden, als auch in den Phasen der Sekundärspannungen relativ zur Erregungsspannung enthalten.

Vor der Einführung von digitalen Signalprozessoren (DSPs) wurden solche Sensoren über maßgeschneiderte Schaltungen erfasst, teils mit diskreten Komponenten, teils in integrierten Schaltungen. Für einen Synchro-Sensor wurden so z. B. Eingangsfilter, Eingangsverstärker, Umwandler (Scott-T Transformatoren) und ein Resolver-Digital-Konverter (RDC) auf einer Leiterkarte aufgebaut.

Derartige Sensordaten sind nun mittels digitaler Signalprozessoren erfassbar, wobei diese Prozessoren in der Lage sind, mehrere analoge Eingangssignale und Ausgangssignale bei einer hohen Abtastfrequenz gleichzeitig zu verarbeiten. Vorteile derartiger digitaler Signalprozessoren sind:

- Alle Funktionen der Messkette, nämlich Transformierung und Auswertung, können im DSP erfolgen, der Verstärkungsschritt kann wegfallen.
- Ein DSP kann mehrere Sensoren erfassen.
- Die Erregungsspannung kann ebenfalls durch denselben DSP erzeugt werden.
- Erfassung erfolgt mit hoher Genauigkeit.
- Übertragungsfunktion und andere Eigenschaften der Messkette können durch Software angepasst werden.
- Fehlererkennung, z. B. Drahtbruch, kann durch Software implementiert werden, es ist keine zusätzliche Prüfschaltung nötig.
- Niedrige Kosten.
- Niedrige Leistungsaufnahme.
- Geringer Platzbedarf auf der Leiterkarte.
- Hohe MTBF (=Mean Time Between Failures).
- Während der Integration und später im Feld sind Änderungen durch Software-Upload möglich.

In manchen Anwendungen werden die Messwerte in sicherheitskritischen Funktionen verwendet, d. h. fehlerhafte Werte können zu erheblicher Gefährdung von Leib und Leben, der Umwelt oder von Sachwerten führen. Für eine komplexe elektronische Komponente wie einen DSP ist es im Allgemeinen nicht möglich, die Fehlerfreiheit mit dafür ausreichender Sicherheit nachzuweisen. Daher können DSPs nicht ohne weiteres in sicherheitskritischen Anwendungen eingesetzt werden.

Auch die Verwendung von zwei redundanten DSPs kann nicht für alle Fehlerfälle Abhilfe schaffen, da Fehler beider Instanzen mit gemeinsamer Ursache möglich sind. Der Einsatz zweier verschiedener DSPs in redundanter Anordnung hingegen würde die Vorteile des DSPs zum großen Teil zunichte machen, genauso wie eine Überwachung des DSPs durch eine vollständige traditionelle Schaltung.

Aus diesem Grund ist es wünschenswert, eine Vorrichtung bzw. ein Verfahren zu haben, das die Überprüfung eines durch einen DSP erfassten Messwertes mit minimalem zusätzlichen Schaltungsaufwand ermöglicht. Im Gegensatz zu der traditionellen Schaltung kann man sich dabei die für einen Prüfwert weniger strengen Anforderungen bezüglich Genauigkeit, Übertragungsgeschwindigkeit und Eindeutigkeit zu Nutze machen. Dadurch und durch die Verwendung weiterer vorhandener Elemente bietet diese Erfindung eine einfache und kostengünstige Methode, einen von einem DSP erfassten Sensorwert so zu überprüfen, dass er für die Verwendung in einer sicherheitskritischen Anwendung geeignet ist.

Sind die sekundären Wechselspannungen gleichgerichtet, können sie von jedem herkömmlichen A/D-Wandler (analog / digital-Wandler) erfasst werden. Ein Kontrollsystem benötigt zumindest einen Zentralprozessor (CPU=Central Processing Unit), der die Kontrollberechnungen mit den von dem klassischen Schaltkreis und/oder den digitalen Signalprozessoren erfassten Prozessdaten betreibt.

Dieser Zentralprozessor unterstützt normalerweise zumindest einen analogen Eingangskanal, der anhand eines Multiplexers in der Lage ist, eine beliebige Anzahl analoger Spannungen, ungeachtet einer reduzierten Abtastfrequenz, zu erfassen.

Es ist jedoch nicht möglich, die Sensorposition eindeutig aus den gleichgerichteten Spannungen zu bestimmen. Weiterhin stellt das Gleichrichten einen Tiefpassfilterprozess dar und bewirkt eine Zeitverzögerung und eine Verstärkung des Signals.

Aus diesem Grund können die gleichgerichteten sekundären Spannungen nicht auf die gleiche Weise verarbeitet werden wie bei normalen Algorithmen zur Berechnung der Sensorposition. Dafür müssen bei den Berechnungen die Zeitverzögerung bei der Signalerfassung und die Mehrdeutigkeit aufgrund von Verlusten bei der Phaseninformation berücksichtigt werden:

- Erfassung gleichgerichteter sekundärer Spannungen, z.B. x und y;
- Invertierung einer oder beider Spannungen: $x^* = -x$ , $y^* = -y$ , um einen Verlust von Phaseninformation während dem Gleichrichten zu kompensieren;
- Berechnung von Sensorpositionen korrelierend mit $p = f(x,y)$ und $p^* = f(x^*,y)$.

Die Tiefpassfilterung und andere in die Signalkette eingeführte Zeitverzögerungen können mittels einer Übertragungsfunktion $f(t)$ ausgedrückt werden. Um diese Übertragungsfunktion auszugleichen, können die erfassten Spannungen oder die berechneten Sensorpositionen mit der inversen Übertragungsfunktion transformiert werden. Da ein Voreilverhalten zur Kompensation einer Signalverzögerung (z. B. PD-Glied) normalerweise zu einer großen Verstärkung des Hintergrundrauschens führt, ist es vorzuziehen, die Übertragungsfunktion auf die von dem digitalen Signalprozessor berechnete Sensorposition $P$ anzuwenden:

$$P` = f(P(t))$$

Normalerweise ist die Zeitverzögerung in der $P$-Signalkette $g(t)$ wesentlich kleiner als in der $p$-bzw. $p^*$-Signalkette, so dass diese ignoriert werden kann. Sollte dies nicht der Fall sein, kann $P'$ wie folgt abgeleitet werden:

$$P`= g^{-1} f(P(t))$$

In dem bisherigen Prozess blieben die Spannungspaare $(x,y^*)$ und $(x^*,y^*)$ unbeachtet. Diese Paare können jedoch entweder berechnet werden oder die ursprüngliche Position $P$ kann auf einen Wertebereich reduziert werden, der ungefähr $p$, $p^*$ entspricht und sich normalerweise aus einer Modulo-Operation mit $m =180$ deg ergibt, mit:

$$P`` = P`\mathrm{mod}(m) .$$

Nun muss mindestens einer der Werte $p$ und $p^*$ nahezu / genau mit $P''$ übereinstimmen, andernfalls ist der P-Wert falsch. Zusätzlich kann die Überwachung der x- und y-Spannungen durchgeführt werden, um zu überprüfen, dass diese Werte innerhalb des gültigen Bereiches liegen.

Gemäß diesem oben geschilderten Grundgedanken schlagen die Erfinder sowohl eine Schaltungsanordnung als auch ein Verfahren vor.

Die erfindungsgemäße Schaltungsanordnung eines sensorgetriggerten Kontroll- und/oder Anzeigesystems im Rahmen einer sicherheitskritischen Anwendung mit einem DSP weist somit auf:

- mindestens einen Sensor, der Positions- und/oder Lagesignale in Form von alternierenden Differenzspannungen, die eine Amplitude und eine Phase aufweisen, an den DSP (Digital Signal Processor) leitet, der aus den zugeführten Signalen relativ genaue und eindeutige Positions- und/oder Lageinformationen berechnet,
- eine Signalkonditionierungsschaltung, welche die Positions- und/oder Lagesignale bezüglich ihres Informationsgehaltes reduziert,
- eine erste Teilkomponente zur welche eine, bezüglich ihrer Genauigkeit reduzierte und/oder mehrdeutige, Positions- und Lageberechnung aus den bezüglich ihres Informationsgehaltes reduzierten Positions- und/oder Lagesignalen berechnet,
- eine zweite Teilkomponente, die als Kontrollinstanz fungiert, welche überprüft, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit übereinstimmt und/oder darin enthalten ist, und

- eine dritte Teilkomponente, welche ein Sensorfehlersignal ausgibt, falls die Überprüfung der Kontrollinstanz negativ ausgefallen ist.

Vorteilhaft kann die Signalkonditionierungsschaltung derart ausgeführt werden, dass diese nur die Amplituden der Positions- und/oder Lagesignale weiterleitet.

Insbesondere zur Verwirklichung einer einfachen, entsprechend vorliegender Sicherheitsvorschriften vollständig analysierbaren und testbaren, Schaltung wird vorgeschlagen, diese Signalkonditionierungsschaltung aus analogen Bauteilen, insbesondere aus mindestens einer Gleichrichterdiode und mindestens einem nachfolgenden Tiefpassfilter aufzubauen.

Weiterhin ist es günstig, wenn mindestens eine der Teilkomponenten durch eine Kombination aus einer Recheneinheit mit einer im Betrieb darin ausgeführten Software verwirklicht ist.

Gemäß einer konkreten Anwendung der erfindungsgemäßen Schaltungsanordnung eignet sich diese besonders in sicherheitsrelevanten Anwendungen, zum Beispiel kann der mindestens eine Sensor ein Lagesensor einer Landeklappe eines Flugzeuges sein.

Die Erfinder schlagen weiterhin auch ein Verfahren zur Überwachung eines DSPs im Rahmen einer sicherheitskritischen Anwendung vor, wobei der DSP aus Positions- und/oder Lagesignalen von Positions- und/oder Lagesensoren die aktuelle Position und/oder Lage eines Gegenstandes ermittelt, indem:

- die dem DSP übertragenen Positions- und/oder Lagesignale bezüglich ihres Informationsgehaltes reduziert werden,
- der reduzierte Informationsgehalt einer Positions- und Lageberechnungsinstanz zugeführt wird, welche aus den bezüglich ihres Informationsgehaltes reduzierten Positions- und/oder Lagesignalen eine, bezüglich ihrer Genauigkeit reduzierte und/oder mehrdeutige, Position und/oder Lage berechnet wird,
- eine Überprüfung stattfindet, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit übereinstimmt, und
- ein Sensorfehlersignal ausgegeben wird, falls die Überprüfung negativ ausgefallen ist.

Hierbei kann vorteilhaft die Signalkonditionierungsschaltung ausschließlich die Amplitudeninformation der Positions- und/oder Lagesignale weiterleiten.

Vorteilhaft ist es auch, wenn die Reduktion des Informationsgehaltes der Positions- und/oder Lagesignale durch analoge Gleichrichtung und anschließende analoge Tiefpassfilterung ausgeführt wird. Schaltungen dieser Art sind in der Regel vollständig analysierbar und testbar, entsprechen also hohen luftfahrttechnischen oder militärischen Sicherheitsanforderungen.

Weiterhin kann die Positions- und/oder Lageberechnung aus dem reduzierten Informationsgehalt der Positions- und/oder Lagesignale durch eine Recheneinheit mit Hilfe einer im Betrieb ausgeführten Software geschehen.

Ebenso kann die Überprüfung, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit enthalten ist, durch eine Recheneinheit mit Hilfe einer im Betrieb ausgeführten Software verwirklicht werden.

Außerdem kann auch die Ausgabe eines Sensorfehlersignals, falls die Überprüfung negativ ausgefallen ist, durch eine Recheneinheit mit Hilfe einer im Betrieb ausgeführten Software geschehen.

Schließlich wird darauf hingewiesen, dass in einer bevorzugten Anwendung des erfindungsgemäßen Verfahrens der mindestens eine Sensor jeweils die Lage einer Landeklappe detektieren kann.

Im Folgenden wird die Erfindung anhand eines bevorzugten konkreten Ausführungsbeispieles mit Hilfe der Figuren näher beschrieben, wobei nur die zum Verständnis der Erfindung notwendigen Merkmale dargestellt sind.

Es zeigen im Einzelnen:

FIG 1: Verlauf der Erregungsspannung eines Resolvers;

FIG 2: Verlauf der ersten Sekundärspannung (Sinus);

FIG 3: Verlauf der zweiten Sekundärspannung (Kosinus);

FIG 4: Phasenverschiebung der Sekundärspannung des Resolvers im ersten Quadranten bei einer Winkelstellung von 40°;

FIG 5: Phasenverschiebung der Sekundärspannung des Resolvers im zweiten Quadranten bei einer Winkelstellung von 130°;

FIG 6: Phasenverschiebung der Sekundärspannung des Resolvers im dritten Quadranten bei einer Winkelstellung von 220°;

FIG 7: Phasenverschiebung der Sekundärspannung des Resolvers im vierten Quadranten bei einer Winkelstellung von 310°;

FIG 8: Schaltungsanordnung zur erfindungsgemäßen Überwachung von durch einen DSP erfassten Sensorwerten.

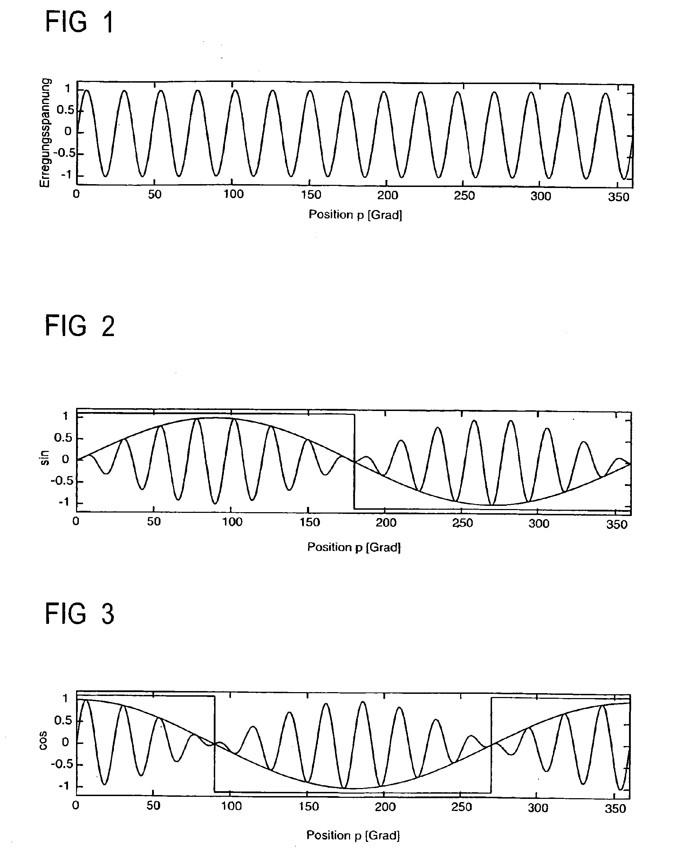

Übliche Positionssensoren, wie LVDTs, RVDTs, Resolver und Synchros werden typischerweise mit einer Wechselspannung erregt und geben eine oder mehrere sekundäre Wechselspannungen entsprechend der detektierten Position sowohl mit unterschiedlichen Amplituden, als auch mit unterschiedlichen Phasen der Sekundärspannungen relativ zur Erregungsspannung aus. Diese Sekundärspannungen enthalten also Sensor-Positionsinformation sowohl in ihren Amplituden als auch in ihrer Phasenlage relativ zur Erregungsspannung. Dies ist am Beispiel eines Resolvers, also eines Winkelgebers, über eine volle Rotation in den Figuren 1 bis 3 dargestellt.

Das Diagramm der **Figur 1** zeigt den Verlauf der Erregungsspannung auf der Ordinate gegenüber der Zeit, dargestellt durch die Winkelposition des Resolvers, auf der Abszisse. Die **Figuren 2 und 3** zeigen den zeitlich parallelen Verlauf der beiden Sekundärspannungen in Form hochfrequenter Sinus- und Kosinuswellen, wobei zusätzlich eine Umhüllende die zeitliche Änderung der Amplituden darstellt. Die zusätzliche rechteckig verlaufende Linie beschreibt dabei die Phasenlage der Sekundärspannung, wobei der Wert 1 für gleichphasig und (-1) für gegenphasig zur Erregung steht.

Es ist ersichtlich, dass die Phasenlage innerhalb jedes Quadranten konstant ist und beim Übergang zum nächsten Quadranten jeweils eine Sekundärspannung in der Phasenlage umspringt. Dahingegen ist die genaue Position innerhalb jedes Quadranten nur aus dem Verhältnis der Amplituden erkennbar.

Während sich die Amplitude einer Wechselspannung durch einfache Gleichrichtung ermitteln lässt, ist die Auswertung der Phasenlage eines der entscheidend komplexitätstreibenden Elemente einer traditionellen Schaltung.

Um eine einfache Schaltung zu erhalten, werden bei der vorliegenden Erfindung die Sekundärspannungen gleichgerichtet und auf die Auswertung der Phasenlage verzichtet. Ein Steuerungs- oder Regelungssystem besitzt im Allgemeinen mindestens eine CPU, die den Regelungs- und Steueralgorithmus ausführt. Diese CPU besitzt im Allgemeinen mindestens einen analogen Eingang (A/D-Wandler), mit dessen Hilfe sich die gleichgerichteten Sekundärspannungen unabhängig vom DSP erfassen lassen.

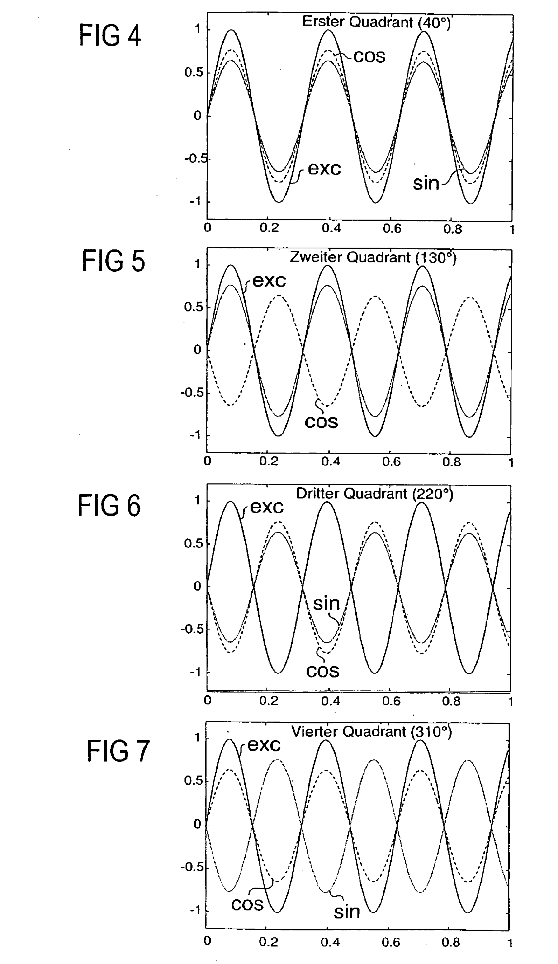

Mit den gleichgerichteten Spannungen ist es allerdings nicht möglich, die Sensorposition eindeutig zu ermitteln. Die Figuren 4 bis 7 zeigen die Erregungsspannung und die Sekundärspannung des eingangs erwähnten Resolvers, beispielhaft für vier verschiedene Winkelstellungen des Winkelgebers, in denen sich die Spannungen nur bezüglich ihrer Phasenlage unterscheiden, bei denen jedoch ihre jeweiligen Amplituden gleich sind. Die **Figur 4** entspricht einer Winkelstellung von 40° im ersten Quadranten, **Figur 5** entspricht einer Winkelstellung von 130° im zweiten Quadranten, **Figur 6** entspricht einer Winkelstellung von 220° im dritten Quadranten und **Figur 7** entspricht einer Winkelstellung von 310° im vierten Quadranten.

Um ein gleichmäßiges Amplitudensignal zu erhalten, ist die Gleichrichtung mit einem Tiefpassfilter gekoppelt, kombiniert oder beides miteinander integriert ausgeführt, wobei zusätzlich auch eine Verstärkung vorgesehen werden kann. Dabei wird der Messwert mit einer zeitlichen Verzögerung beaufschlagt, so dass die Verzögerung der gleichgerichteten Sekundärspannungen entweder beim späteren Vergleich mit dem DSP-Ausgangssignal berücksichtigt werden sollte oder eine entsprechende Zeitangleichung durchgeführt werden sollte.

Grundsätzlich lässt sich jedoch überprüfen, ob die vom DSP ausgegebene Position oder Lage zu einer der vier aus dem tiefpassgefilterten Amplitudensignal berechneten möglichen Positionsvarianten passt. Ist dies nicht der Fall, so liegt ein Fehler vor.

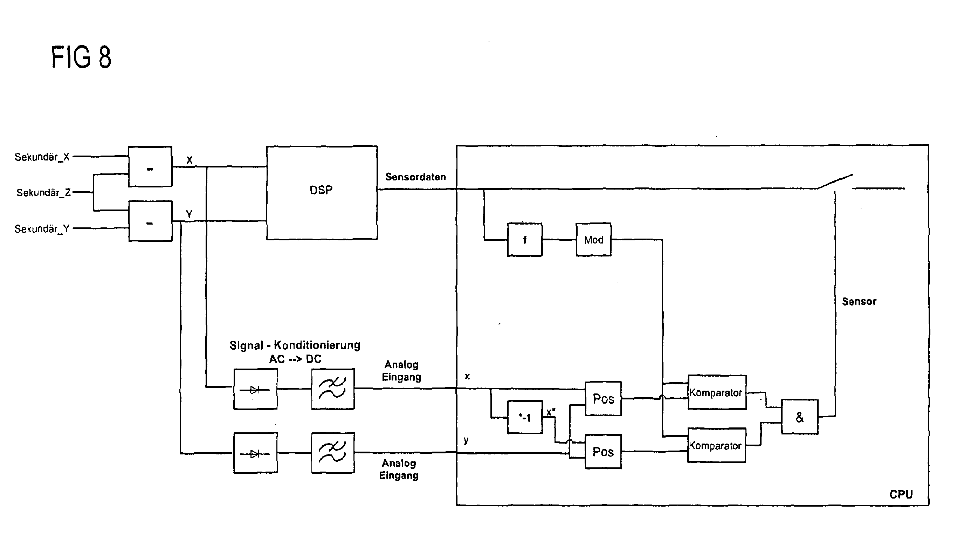

In der **Figur 8** ist schließlich eine konkrete Ausführungsform einer erfindungsgemäßen Schaltungsanordnung zur Überwachung eines DSPs gezeigt. Dabei werden die Positions- und Lagesignale der Sensoren in Form der Sekundärspannungen $x$ und $y$ nicht nur dem DSP zugeführt, sondern parallel hierzu einer Signalkonditionierung zugeführt, wo sie durch einen Gleichrichter und Tiefpassfilter jeweils von einer Wechselspannung in eine Gleichspannung gewandelt und gegebenenfalls verstärkt werden. In der einfachsten hier dargestellten Ausführung ist diese einzige zusätzliche Hardware-Schaltung, die benötigt wird, mit zwei Dioden und zwei Widerständen realisierbar.

Anschließend erfolgt eine digitale Erfassung der gleichgerichteten Sekundärspannungen unabhängig vom DSP durch eine CPU.

Da die Phaseninformation nicht mehr vorliegt, müssen nun die verschiedenen Fälle der Phasenlage berücksichtigt werden. An Stelle der Phaseninformation tritt jetzt das Vorzeichen der gleichgerichteten Sekundärspannung. Daher werden eine oder beide Spannungen $x^* = -x$ , $y^* = -y$ invertiert.

Es folgt die Ermittlung von zwei Sensorpositionen die mit den erfassten und mit den invertierten Sekundärspannungen übereinstimmen, wobei gilt: $p = f(x, y)$ und $p^* = f(x^*,y)$.

Die Verzögerung der Tiefpassfilterung und weitere Verzögerungen der Messkette können durch eine Übertragungsfunktion $f(t)$ ausgedrückt werden. Um diese Verzögerung zu kompensieren, könnten die erfassten Sekundärspannungen mit der inversen Übertragungsfunktion beaufschlagt werden. Da dies im Allgemeinen zu unerwünschter Verstärkung von Signalfehlern führt, wird stattdessen vorzugsweise der vom DSP berechnete Positionswert ebenfalls mit $f(t)$ verzögert. Es gilt: $P' = f(P(t))$.

Im Allgemeinen ist die Verzögerung $g(t)$ in der Messkette von $P$ viel geringer als die in der Messkette von $p, p^*$ und kann somit vernachlässigt werden. Andernfalls muss $P'$ wie folgt ermittelt werden: $P' = g^{-1}f(P(t))$.

Bisher wurden die Spannungspaarungen $(x,y^*)$ und $(x^*,y^*)$ nicht berücksichtigt. Diese können entweder auch berechnet werden, oder die Position $P'$ wird auf den durch *p, p\** abgedeckten Wertebereich reduziert. Dies erfolgt im Beispiel durch die Modulo-Operation $P''= P'mod(m)$ mit $m$ = 180 deg.

Nun muss mindestens einer der Werte *p, p\** mit $P''$ in enger Übereinstimmung im Bereich der Messgenauigkeit sein, andernfalls liegt ein Fehler in der Sensorerfassung vor.

Ergänzend können auch weitere Prüfungen der erfassten Signale durchgeführt werden, um die Fehlererkennung zu verbessern. Zum Beispiel kann eine Prüfung der Sekundärspannungen auf einen gültigen Wertebereich oder eine Prüfung der Position *P* auf Unstetigkeiten durchgeführt werden.

Insgesamt wird also mit der Erfindung eine Schaltungsanordnung eines sensorgetriggerten Kontroll- und/oder Anzeigesystems im Rahmen einer sicherheitskritischen Anwendung mit einem DSP und Verfahren zur Überwachung des DSP vorgestellt, wobei die dem DSP übertragenen Positions- und/oder Lagesignale bezüglich ihres Informationsgehaltes reduziert werden, der reduzierte Informationsgehalt einer Positions- und Lageberechnungsinstanz zugeführt und überprüft wird, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit enthalten ist, und ein Sensorfehlersignal ausgegeben wird, falls die Überprüfung negativ ausgefallen ist.

**Patentansprüche**

**1.** Schaltungsanordnung eines sensorgetriggerten Kontroll- und/oder Anzeigesystems im Rahmen einer sicherheitskritischen Anwendung mit einem DSP, aufweisend:

mindestens einen Sensor, der Positions- und/oder Lagesignale in Form von alternierenden Differenzspannungen, die eine Amplitude und eine Phase aufweisen, an den DSP leitet, der aus den zugeführten Signalen relativ genaue und eindeutige Positions- und/oder Lageinformationen berechnet,
eine Signalkonditionierungsschaltung, welche die Positions- und/oder Lagesignale bezüglich ihres Informationsgehaltes reduziert,
eine erste Teilkomponente welche eine, bezüglich ihrer Genauigkeit reduzierte und/oder mehrdeutige, Positions- und Lageberechnung aus den bezüglich ihres Informationsgehaltes reduzierten Positions- und/oder Lagesignalen berechnet,
eine zweite Teilkomponente, die als Kontrollinstanz fungiert, welche überprüft, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit übereinstimmt und/oder darin enthalten ist, und
eine dritte Teilkomponente, welche ein Sensorfehlersignal ausgibt, falls die Überprüfung der Kontrollinstanz negativ ausgefallen ist.

**2.** Schaltungsanordnung gemäß dem voranstehenden Patentanspruch 1, **dadurch gekennzeichnet, dass** die Signalkonditionierungsschaltung derart ausgeführt ist, dass sie nur die Amplituden der Positions- und/oder Lagesignale weiterleitet.

**3.** Schaltungsanordnung gemäß dem voranstehenden Patentanspruch 2, **dadurch gekennzeichnet, dass** die Signalkonditionierungsschaltung aus analogen Bauteilen aufgebaut ist.

**4.** Schaltungsanordnung gemäß einem der voranstehenden Patentansprüche 1 bis 3, **dadurch gekennzeichnet, dass** die Signalkonditionierungsschaltung aus mindestens einer Gleichrichterdiode und mindestens einem nachfolgenden Tiefpassfilter besteht.

**5.** Schaltungsanordnung gemäß einem der voranstehenden Patentansprüche 1 bis 3, **dadurch gekennzeichnet, dass** mindestens eine der Teilkomponenten durch eine Kombination aus einer Recheneinheit mit einer im Betrieb darin ausgeführten Software verwirklicht ist.

**6.** Schaltungsanordnung gemäß einem der voranstehenden Patentansprüche 1 bis 2, **dadurch gekennzeichnet, dass** der mindestens eine Sensor ein Lagesensor einer Landeklappe ist.

**7.** Verfahren zur Überwachung eines DSPs im Rahmen einer sicherheitskritischen Anwendung, wobei der DSP aus Positions- und/oder Lagesignalen von Positions- und/oder Lagesensoren die aktuelle Position und/oder Lage eines Gegenstandes ermittelt, indem:

die dem DSP übertragenen Positions- und/oder Lagesignale bezüglich ihres Informationsgehaltes reduziert werden,
der reduzierte Informationsgehalt einer Positions- und Lageberechnungsinstanz zugeführt wird, welche aus den bezüglich ihres Informationsgehaltes reduzierten Positions- und/oder Lagesignalen eine, bezüglich ihrer Genauigkeit reduzierte und/oder mehrdeutige, Position und/oder Lage berechnet,
überprüft wird, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit enthalten ist, und ein Sensorfehlersignal ausgegeben wird, falls die Überprüfung negativ ausgefallen ist.

8. Verfahren gemäß dem voranstehenden Patentanspruch 7, **dadurch gekennzeichnet, dass** die Signalkonditionierungsschaltung ausschließlich die Amplitudeninformation der Positions- und/oder Lagesignale weiterleitet.

9. Verfahren gemäß einem der voranstehenden Patentansprüche 7 bis 8, **dadurch gekennzeichnet, dass** die Reduktion des Informationsgehaltes der Positions- und/oder Lagesignale durch analoge Gleichrichtung und anschließende analoge Tiefpassfilterung ausgeführt wird.

10. Verfahren gemäß einem der voranstehenden Patentansprüche 7 bis 9, **dadurch gekennzeichnet, dass** die Positions- und/oder Lageberechnung aus dem reduzierten Informationsgehalt der Positions- und/oder Lagesignale durch eine Recheneinheit mit Hilfe einer im Betrieb ausgeführten Software geschieht.

11. Verfahren gemäß einem der voranstehenden Patentansprüche 7 bis 10, **dadurch gekennzeichnet, dass** die Überprüfung, ob die vom DSP ermittelte eindeutige Position und/oder Lage mit der von der Positions- und Lageberechnungsschaltung bestimmten ungenauen und/oder mehrdeutigen Position und/oder Lage im Rahmen der Genauigkeit und/oder Mehrdeutigkeit übereinstimmt, durch eine Recheneinheit mit Hilfe einer im Betrieb ausgeführten Software geschieht.

12. Verfahren gemäß einem der voranstehenden Patentansprüche 7 bis 9, **dadurch gekennzeichnet, dass** die Ausgabe eines Sensorfehlersignals, falls die Überprüfung negativ ausgefallen ist, durch eine Recheneinheit mit Hilfe einer im Betrieb ausgeführten Software geschieht.

13. Verfahren gemäß einem der voranstehenden Patentansprüche 7 bis 8, **dadurch gekennzeichnet, dass** der mindestens eine Sensor jeweils die Lage einer Landeklappe detektiert.

**Claims**

1. Circuit arrangement of a sensor-triggered control and/or display system in the context of a safety-critical application with a DSP, comprising:

at least one sensor, which passes position and/or attitude signals in the form of alternating difference voltages having an amplitude and a phase to the DSP, which calculates relatively accurate and unambiguous position and/or attitude information from the supplied signals,
a signal conditioning circuit, which reduces the position and/or attitude signals in terms of their information content,
a first sub-component, which calculates a position and attitude calculation, which is reduced in terms of its accuracy and/or which is ambiguous, from the position and/or attitude signals having reduced information content,
a second sub-component, which functions as a control instance, which checks whether the unambiguous position and/or attitude determined by the DSP agrees with the inaccurate and/or ambiguous position and/or attitude determined by the position and attitude calculation circuit to within the scope of the accuracy and/or ambiguity and/or is contained therein, and
a third sub-component, which outputs a sensor fault signal if the check of the control instance is negative.

2. Circuit arrangement according to the preceding Claim 1, **characterized in that** the signal conditioning circuit is implemented in such a way that it only passes on the amplitudes of the position and/or attitude signals.

3. Circuit arrangement according to the preceding Claim 2, **characterized in that** the signal conditioning circuit is constructed of analog components.

4. Circuit arrangement according to any one of the preceding Claims 1 to 3, **characterized in that** the signal conditioning circuit consists of at least one rectifier diode and at least one downstream low pass filter.

5. Circuit arrangement according to any one of the preceding Claims 1 to 3, **characterized in that** at least one of the sub-components is implemented by a combination of an arithmetic unit with software that is executed therein during operation.

6. Circuit arrangement according to any one of the preceding Claims 1 to 2, **characterized in that** the at least one sensor is an attitude sensor of a landing flap.

7. Method for the monitoring of a DSP in the context of a safety-critical application, wherein the DSP determines the actual position and/or attitude of an object from position and/or attitude signals of position and/or attitude sensors, by the following:

the position and/or attitude signals transferred to the DSP are reduced in terms of their information content,

the reduced information content is supplied to a position and attitude calculation instance, which calculates a position and/or attitude having reduced accuracy and/or being ambiguous from the position and/or attitude signals having reduced information content,

a check is made as to whether the unambiguous position and/or attitude determined by the DSP agrees with the inaccurate and/or ambiguous position and/or attitude determined by the position and attitude calculation circuit to within the scope of the accuracy and/or ambiguity and/or is contained therein, and

a sensor fault signal is output if the check is negative.

8. Method according to the preceding Claim 7, **characterized in that** the signal conditioning circuit only passes on the amplitude information of the position and/or attitude signals.

9. Method according to any one of the preceding Claims 7 to 8, **characterized in that** the reduction of the information content of the position and/or attitude signals is carried out by analog rectification and then analog low pass filtering.

10. Method according to any one of the preceding Claims 7 to 9, **characterized in that** the position and/or attitude calculation from the reduced information content of the position and/or attitude signals is carried out by an arithmetic unit with the aid of software that is executed during operation.

11. Method according to any one of the preceding Claims 7 to 10, **characterized in that** the check as to whether the unambiguous position and/or attitude determined by the DSP agrees with the inaccurate and/or ambiguous position and/or attitude determined by the position and attitude calculation circuit to within the scope of the accuracy and/or ambiguity is carried out by an arithmetic unit with the aid of software that is executed during operation.

12. Method according to any one of the preceding Claims 7 to 9, **characterized in that** the output of a sensor error signal if the check is negative is carried out by an arithmetic unit with the aid of software that is executed during operation.

13. Method according to any one of the preceding Claims 7 to 8, **characterized in that** each of the at least one sensors detects the attitude of a landing flap.

**Revendications**

1. Arrangement de circuit d'un système de contrôle et/ou d'affichage déclenché par capteur dans le cadre d'une application avec un DSP où la sécurité est essentielle, présentant :

au moins un capteur qui achemine au DSP des signaux de position et/ou d'état sous la forme de tensions différentielles alternées, lesquelles présentent une amplitude et une phase, ledit DSP calculant à partir des signaux acheminés des informations de position et/ou d'état relativement précises et univoques,

un circuit de conditionnement de signal qui réduit les signaux de position et/ou d'état pour ce qui concerne le contenu de leurs informations,

un premier composant partiel qui calcule à partir des signaux de position et/ou d'état réduits pour ce qui concerne le contenu de leurs informations, un calcul de position et d'état réduit et/ou multivoque pour ce qui concerne sa précision,

un deuxième composant partiel qui fait office d'instance de contrôle et qui vérifie si la position et/ou l'état univoque déterminé(e) par le DSP coïncide avec la position et/ou l'état imprécis(e) et/ou multivoque déterminé(e) par le circuit de calcul de position et d'état dans le cadre de la précision et/ou du caractère multivoque et/ou y est inclus(e), et

un troisième composant partiel qui délivre un signal de défaut de capteur dans le cas où la vérification de l'instance de contrôle a produit un résultat négatif.

2. Arrangement de circuit selon la revendication 1 précédente, **caractérisé en ce que** le circuit de conditionnement de signal est réalisé de telle sorte qu'il ne transfère que les amplitudes des signaux de position et/ou d'état.

3. Arrangement de circuit selon la revendication 2 précédente, **caractérisé en ce que** le circuit de conditionnement de signal est constitué de composants analogiques.

4. Arrangement de circuit selon l'une des revendications précédentes 1 à 3, **caractérisé en ce que** le circuit de conditionnement de signal se compose d'au moins une diode de redressement et d'au moins un filtre passe-bas branché en aval.

5. Arrangement de circuit selon l'une des revendications précédentes 1 à 3, **caractérisé en ce qu'**au moins l'un des composants partiels est réalisé par une combinaison d'une unité de calcul avec un logiciel qui est exécuté dans celle-ci lors du fonctionnement.

**6.** Arrangement de circuit selon l'une des revendications précédentes 1 à 2, **caractérisé en ce que** l'au moins un capteur est un capteur d'état d'un volet d'atterrissage.

**7.** Procédé de surveillance d'un DSP dans le cadre d'une application où la sécurité est essentielle, le DSP déterminant la position et/ou l'état actuel(le) d'un objet à partir de signaux de position et/ou d'état de capteurs de position et/ou d'état, en ce que :

> les signaux de position et/ou d'état transmis au DSP sont réduits pour ce qui concerne le contenu de leurs informations,
> le contenu des informations réduit est acheminé à une instance de calcul de position et d'état qui, à partir des signaux de position et/ou d'état réduits pour ce qui concerne le contenu de leurs informations, calcule une position et/ou un état réduit(e) et/ou multivoque pour ce qui concerne sa précision,
> il est vérifié si la position et/ou l'état univoque déterminé(e) par le DSP coïncide avec la position et/ou l'état imprécis(e) et/ou multivoque déterminé(e) par le circuit de calcul de position et d'état dans le cadre de la précision et/ou du caractère multivoque et/ou y est inclus(e), et
> un signal de défaut de capteur est délivré dans le cas où la vérification a produit un résultat négatif.

**8.** Procédé selon la revendication 7 précédente, **caractérisé en ce que** le circuit de conditionnement de signal transfère exclusivement les informations d'amplitude des signaux de position et/ou d'état.

**9.** Procédé selon l'une des revendications précédentes 7 à 8, **caractérisé en ce que** la réduction du contenu des informations des signaux de position et/ou d'état est réalisée par redressement analogique et ensuite filtrage passe-bas analogique.

**10.** Procédé selon l'une des revendications précédentes 7 à 9, **caractérisé en ce que** le calcul de la position et/ou de l'état à partir du contenu réduit des informations des signaux de position et/ou d'état est effectué par une unité de calcul à l'aide d'un logiciel qui est exécuté lors du fonctionnement.

**11.** Procédé selon l'une des revendications précédentes 7 à 10, **caractérisé en ce que** la vérification si la position et/ou l'état univoque déterminé(e) par le DSP coïncide avec la position et/ou l'état imprécis(e) et/ou multivoque déterminé(e) par le circuit de calcul de position et d'état dans le cadre de la précision et/ou du caractère multivoque est effectuée par une unité de calcul à l'aide d'un logiciel qui est exécuté lors du fonctionnement.

**12.** Procédé selon l'une des revendications précédentes 7 à 9, **caractérisé en ce que** la délivrance d'un signal de défaut de capteur, dans le cas où la vérification a produit un résultat négatif, est effectuée par une unité de calcul à l'aide d'un logiciel qui est exécuté lors du fonctionnement.

**13.** Procédé selon l'une des revendications précédentes 7 à 8, **caractérisé en ce que** l'au moins un capteur détecte à chaque fois l'état d'un volet d'atterrissage.

FIG 1

FIG 2

FIG 3

FIG 4

Erster Quadrant (40°)

cos

exc

sin

FIG 5

Zweiter Quadrant (130°)

exc

cos

FIG 6

Dritter Quadrant (220°)

exc

sin

cos

FIG 7

Vierter Quadrant (310°)

exc

cos

sin

# FIG 8

EP 2 622 418 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1980924 A1